# EUROPEAN PATENT SPECIFICATION

(11) **EP 3 896 838 B1**
(45) Date of publication and mention of the grant of the patent: **26.07.2023**
(21) Application number: 20744736.8
(22) Date of filing: 21.01.2020
(51) Int. Cl.: H02N 1/08, B81B 3/00

(54) **VIBRATION POWER GENERATION ELEMENT**
SCHWINGUNGSENERGIEERZEUGUNGSELEMENT
ÉLÉMENT DE GÉNÉRATION D'ÉNERGIE DE VIBRATION

(30) Priority: 22.01.2019 JP 2019008337
(43) Date of publication of application: 20.10.2021
(73) Proprietor: The University of Tokyo, Bunkyo-ku Tokyo 113-8654 (JP); Saginomiya Seisakusho, Inc., Tokyo 165-0033 (JP)
(72) Inventor: TOSHIYOSHI, Hiroshi, Tokyo 113-8654 (JP); HONMA, Hiroaki, Tokyo 113-8654 (JP); MITSUYA, Hiroyuki, Sayama-shi, Saitama 350-1395 (JP)
(74) Representative: Kramer Barske Schmidtchen Patentanwälte PartG mbB
(86) International application number: PCT/JP2020/001967
(87) International publication number: WO 2020/153362

(56) References cited:
- JP-A- 2005 045 976
- JP-A- 2006 334 697
- JP-A- 2013 172 605
- JP-A- 2013 172 605
- JP-A- 2016 059 191

## Description

### [Technical Field]

The present invention relates to a vibration-driven energy harvesting element.

### [Background Art]

In recent years, a very small vibration-driven energy harvesting element has been developed by using a MEMS technology. For example, in Patent Literature 1, a moveable electrode portion on which a comb electrode is formed is made to vibrate with respect to a fixed portion on which a comb electrode is formed to generate electricity. In a vibration-driven energy harvesting element described in Patent Literature 1, a fixed portion, a moveable portion, and a support beam portion that elastically supports the moveable portion are formed in one layer of an SOI (Silicon On Insulator) substrate of 3-layers structure, and change in capacitance is used to generate electricity when the moveable portion is vibrated with respect to the fixed portion.

Prior art document JP2013172605A also discloses a vibration-driven energy harvesting element comprising all the features of the preamble of claims 1 and 6.

### [Citation List]

### [Patent Literature]

[Patent Literature 1] Japanese Patent No. 6338070

### [Summary of Invention]

### [Technical Problem]

One way of increasing the amount of power generation while restraining increase in the size of the vibration-driven energy harvesting element is to enhance change in capacitance by increasing the area ratio of the fixed portion and the moveable portion in the vibration-driven energy harvesting element. However, the vibration-driven energy harvesting element described in Patent Literature 1 requires an area for arranging the support beam portion, and the support beam portion has been an obstructive factor for increasing the area ratio of the fixed portion and the moveable portion. As a result, a problem has been that the size of the vibration-driven energy harvesting element is increased by the area for the support beam portion.

### [Solution to Problem]

According to a first aspect of the present invention, a vibration-driven energy harvesting element includes: a fixed electrode portion and a moveable electrode portion formed in a second layer of a substrate provided with a first layer and the second layer with an insulation layer interposed therebetween; a frame body formed from the first layer and the second layer disposed with the insulation layer interposed therebetween, the frame body supporting the fixed electrode portion in the second layer; an elastically-supporting portion formed in the first layer and elastically supporting the moveable electrode portion by a beam portion joined to the first layer of the frame body; and a first conduction portion electrically connecting the moveable electrode portion and the elastically-supporting portion.

Preferably, according to a second aspect of the present invention, in the vibration-driven energy harvesting element according to the first aspect, the first conduction portion includes a first plate-like member formed in the second layer that is continuous with the moveable electrode portion and facing the elastically-supporting portion without the insulation layer interposed therebetween, the first plate-like member has: a first deforming portion in a cantilevered shape facing the elastically-supporting portion without the insulation layer interposed therebetween; and a first attaching portion connected to a distal end of the first deforming portion in a cantilevered shape and extending from the distal end in a folding back manner in a root direction of the first deforming portion, the first attaching portion being attached to the elastically-supporting portion, and the first deforming portion and the first attaching portion have a plurality of holes formed therein, the holes passing through in a thickness direction of the first plate-like member.

Preferably, according to a third aspect of the present invention, in the vibration-driven energy harvesting element according to the first or second aspect, a second conduction portion electrically connecting the first layer and the second layer of the frame body is included.

Preferably, according to a fourth aspect of the present invention, in the vibration-driven energy harvesting element according to the third aspect, the second conduction portion includes a second plate-like member formed in the second layer of the frame body and facing the first layer of the frame body without the insulation layer interposed therebetween, the second plate-like member has: a second deforming portion in a cantilevered shape facing the first layer of the frame body without the insulation layer interposed therebetween; and a second attaching portion connected to a distal end of the second deforming portion in a cantilevered shape and extending from the distal end in a folding back manner in a root direction of the second deforming portion, the second attaching portion being attached to the first layer of the frame body, and the second deforming portion and the second attaching portion have a plurality of holes formed therein, the holes passing through in a thickness direction of the second plate-like member.

Preferably, according to a fifth aspect of the present invention, in the vibration-driven energy harvesting element according to any one of the first to fourth aspects, the fixed electrode portion has a plurality of fixed comb teeth, the moveable electrode portion has a plurality of moveable comb teeth arranged to interdigitate with the plurality of fixed comb teeth with a gap interposed therebetween, and the elastically-supporting portion elastically supports the moveable electrode portion so as to be displaceable in a direction in which an amount of insertion of the moveable comb teeth relative to the fixed comb teeth changes.

According to a sixth aspect of the present invention, a vibration-driven energy harvesting element includes: a fixed comb electrode formed in a first layer of a substrate including the first layer and a second layer layered with an insulation layer interposed therebetween; a moveable comb electrode formed in the first layer and moveable relative to the fixed comb electrode; an elastically-supporting portion formed in the second layer and elastically supporting the moveable comb electrode; and a connecting portion formed in the first layer and mechanically and electrically connecting the moveable comb electrode to the elastically-supporting portion.

### [Advantageous Effects of Invention]

According to the present invention, the size of the vibration-driven energy harvesting element can be reduced.

### [Brief Description of Drawings]

[Figure 1] Figure 1 is a plan view illustrating an example of a vibration-driven energy harvesting element.
[Figure 2] Figure 2 illustrates shapes of a handle layer and a BOX layer of the vibration-driven energy harvesting element.
[Figure 3] Figure 3 illustrates details of a conduction portion provided in a moveable electrode portion.
[Figure 4] Figure 4 illustrates details of a conduction portion provided in a supporting portion.
[Figure 5] Figure 5 illustrates a procedure for forming the vibration-driven energy harvesting element.
[Figure 6] Figure 6 illustrates a procedure for forming the vibration-driven energy harvesting element for explanation of a step subsequent to the step in Figure 5.
[Figure 7] Figure 7 illustrates a procedure for forming the vibration-driven energy harvesting element for explanation of a step subsequent to the step in Figure 6.
[Figure 8] Figure 8 illustrates a procedure for forming the vibration-driven energy harvesting element for explanation of a step subsequent to the step in Figure 7.
[Figure 9] Figure 9 provides views for explanation of dimensions of through holes formed in the conduction portion.
[Figure 10] Figure 10 is a schematic view of the conduction portion.
[Figure 11] Figure 11 illustrates a comparative example for the vibration-driven energy harvesting element of the embodiment.
[Figure 12] Figure 12 is a partial sectional view illustrating a structure of a case in which the vibration-driven energy harvesting element is accommodated.
[Figure 13] Figure 13 illustrates other examples of the conduction portion.
[Figure 14] Figure 14 illustrates a variation for the vibration-driven energy harvesting element of the embodiment.

### [Description of Embodiments]

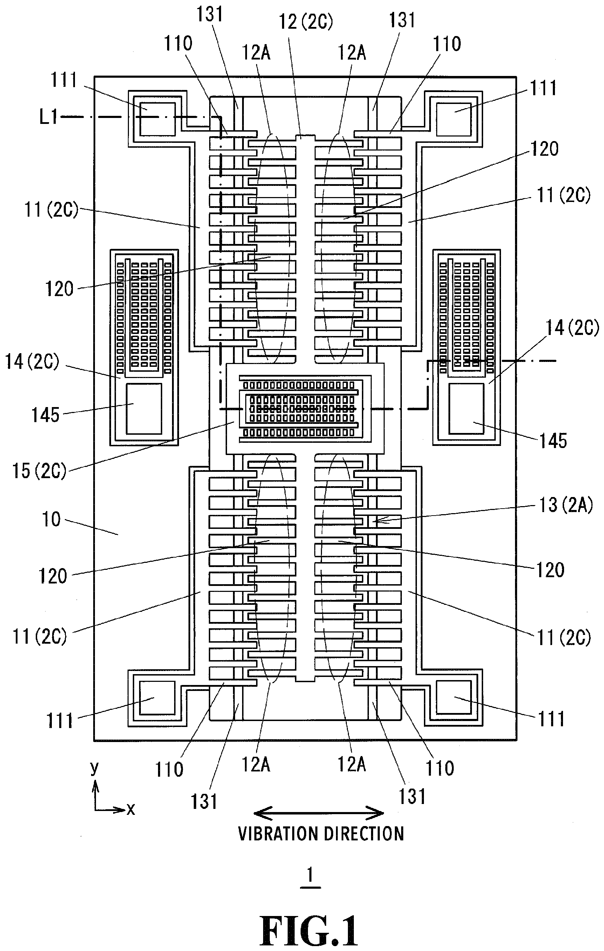

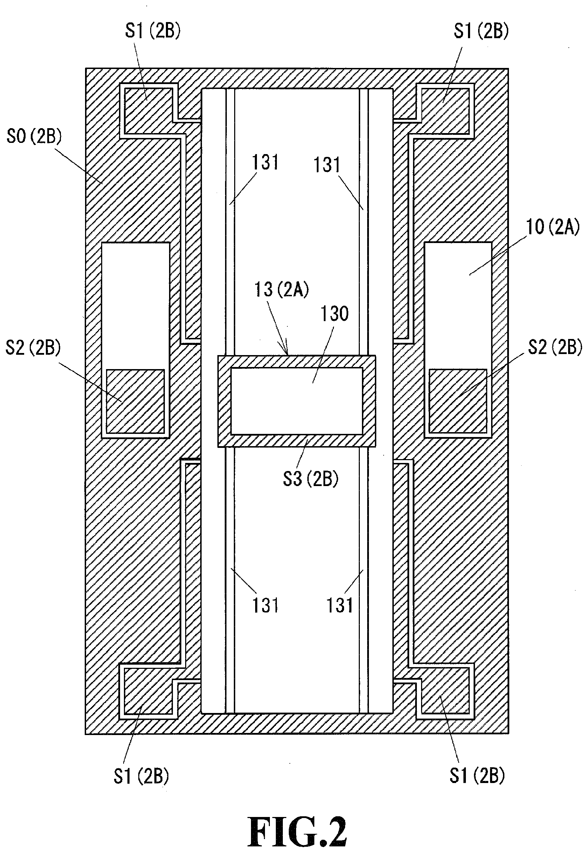

Modes for implementing the present invention will now be described with reference to the drawings. Figure 1 is a plan view illustrating an example of a vibration-driven energy harvesting element 1. The vibration-driven energy harvesting element 1 is formed by using an SOI (Silicon On Insulator) substrate and through a general MEMS processing technology. The SOI substrate is a substrate of 3-layers structure composed of a handle layer 2A made of Si, a BOX layer 2B made of SiO₂, and a device layer 2C made of Si. Figure 2 illustrates shapes of the handle layer 2A and the BOX layer 2B in the vibration-driven energy harvesting element 1.

### (Configuration of Vibration-driven energy harvesting element 1)

The vibration-driven energy harvesting element 1 includes a frame body 10 in a frame shape, 4 sets of fixed electrode portions 11 fixed to the frame body 10, a moveable electrode portion 12, a part of which is paired with one of the fixed electrode portions 11, an elastically-supporting portion 13 elastically supporting the moveable electrode portion 12, and a conduction portion 15 mechanically and electrically connecting the moveable electrode portion 12 to the elastically-supporting portion 13. In Figure 1, the device layer 2C is provided on a front face side as illustrated, the 4 sets of fixed electrode portions 11 and the moveable electrode portion 12 are formed in the device layer 2C, and the elastically-supporting portion 13 is formed in the handle layer 2A on a back face side. The frame body 10 is formed from the handle layer 2A and the device layer 2C disposed with the BOX layer 2B interposed therebetween. In the frame body 10, conduction portions 14, which mechanically and electrically connect the device layer 2C on the front face side and the handle layer 2A on the back face side, are formed at two locations. The conduction portion 15 is formed in a similar manner in the center of the moveable electrode portion 12. Each of the fixed electrode portions 11 is provided with an electrode pad 111, and each of the conduction portion 14 is also provided with an electrode pad 145.

### (Elastically-Supporting Portion 13)

As illustrated in Figure 2, the elastically-supporting portion 13 is formed in the handle layer 2A. The elastically-supporting portion 13 includes a moveable electrode joint portion 130 disposed with the moveable electrode portion 12 being joined thereto, the moveable electrode portion 12 being formed in the device layer 2C, and 4 sets of beam portions 131 elastically supporting the moveable electrode joint portion 130 on the frame body 10 formed in the handle layer 2A. The conduction portion 15 in the device layer 2C illustrated in Figure 1 is electrically connected to the moveable electrode joint portion 130 in the handle layer 2A with a deforming portion 151 interposed therebetween, which will be described later. Accordingly, the moveable electrode portion 12 on the front face side of the SOI substrate is electrically continuous with the moveable electrode joint portion 130 on the back face side of the SOI substrate with the conduction portion 15 interposed therebetween. The frame body 10 is in a rectangular frame shape, and the 4 sets of beam portions 131 of the elastically-supporting portion 13 in the handle layer 2A are joined to the handle layer 2A of the frame body 10.

As described above, the moveable electrode portion 12 in the device layer 2C is joined to the moveable electrode joint portion 130 in the handle layer 2A with the deforming portion 151 of the conduction portion 15 in the device layer 2C interposed therebetween, and the moveable electrode joint portion 130 is elastically supported in the handle layer 2A of the frame body 10 by the beam 131.

A hatched area S0 in Figure 2 indicates the BOX layer 2B between the handle layer 2A of the frame body 10 and the device layer 2C. An area S1 indicates the BOX layer 2B between the fixed electrode portion 11 in the device layer 2C and the handle layer 2A of the frame body 10. An area S2 indicates the BOX layer 2B between the conduction portion 14 in the device layer 2C and the handle layer 2A of the frame body 10. An area S3 indicates the BOX layer 2B between the moveable electrode portion 12 in the device layer 2C and the moveable electrode joint portion 130 in the handle layer 2A.

### (Fixed Electrode Portion 11 and Moveable Electrode Portion 12)

As illustrated in Figure 1, each of the 4 sets of fixed electrode portions 11 has a comb teeth row of a plurality of fixed comb teeth 110, each of which extends in an x-direction, are arranged in line in a y-direction. The moveable electrode portion 12 has 4 sets of moveable comb teeth groups 12A corresponding the 4 sets of fixed electrode portions 11. Each of the moveable comb teeth groups 12A form a comb teeth row of a plurality of moveable comb teeth 120, each of which extends in the x-direction, are arranged in line in the y-direction. A plurality of fixed comb teeth 110 formed in the fixed electrode portion 11 and a plurality of moveable comb teeth 120 of the moveable comb teeth groups 12A corresponding to the fixed electrode portion 11 including the fixed comb teeth 110 are arranged to interdigitate with each other with a gap interposed therebetween maintaining a predetermined interdigitated length in the x-direction while in a stationary state (neutral state).

When an external impact is applied to the vibration-driven energy harvesting element 1, the beam portion 131 is elastically deformed, causing the moveable electrode portion 12 to vibrate in the x-direction in Figure 1. At least one set of the fixed comb teeth 110 and the moveable comb teeth 120 is provided with an electret formed thereon and vibration of the moveable electrode portion 12 causes change in the interdigitated length between the fixed comb teeth 110 and the moveable comb teeth 120 to generate electric power. The fixed comb teeth 110 and the moveable comb teeth 120 may be provided with the respective electrets.

### (Conduction Portion 15)

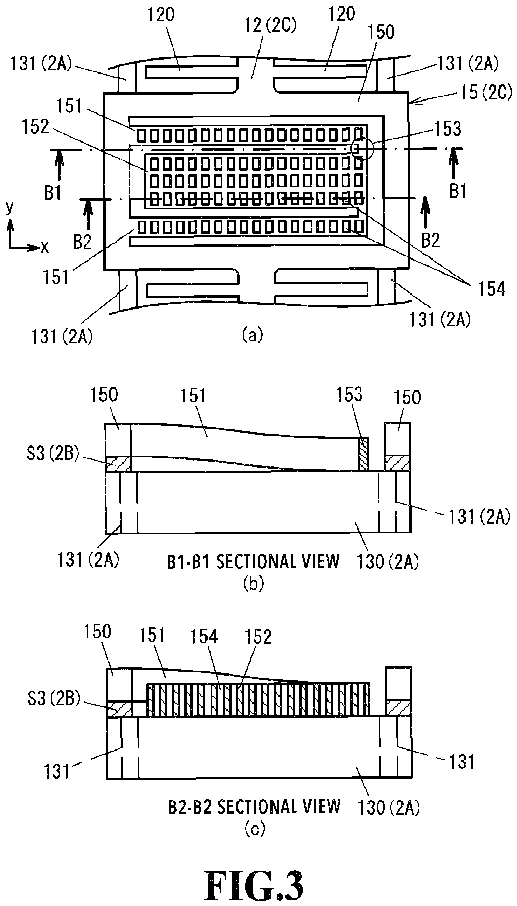

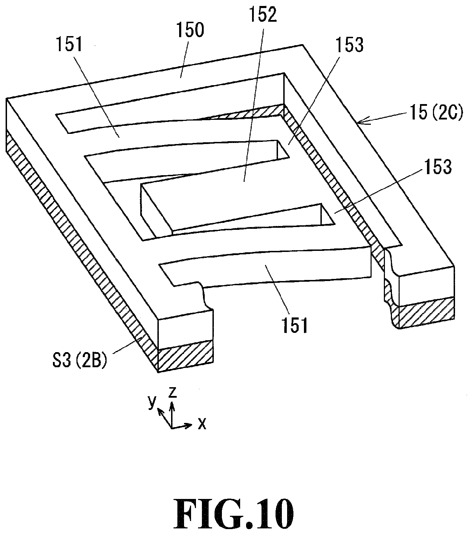

Figure 3 illustrates the conduction portion 15 provided in the moveable electrode portion 12 in detail, and a view (a) is a plan view, a view (b) is a B1-B1 sectional view, and a view (c) is a B2-B2 sectional view. The conduction portion 15 is formed in the device layer 2C. The conduction portion 15 includes a frame portion 150, the deforming portion 151 and an attaching portion 152. A distal end area of the deforming portion 151 and the attaching portion 152 are in contact with the moveable electrode joint portion 130 formed in the handle layer 2A due to what is called a stiction phenomenon. The frame portion 150 is fixed to the moveable electrode joint portion 130 in the handle layer 2A with the BOX layer 2B in the area S3 illustrated in Figure 2 interposed therebetween. A root portion of the deforming portion 151 (left end in the figure) is connected to the frame portion 150, and a distal end (right end in the figure) is connected to the attaching portion 152 with a joint portion 153 interposed therebetween. The attaching portion 152 is in contact with the moveable electrode joint portion 130 in the handle layer 2A substantially in its entire bottom surface by flexural deformation of the deforming portion 151 of the conduction portion 15 provided in the device layer 2C. The exterior shape of the conduction portion 15 is illustrated in Figure 10 as described below.

The deforming portion 151 and the attaching portion 152 include a plurality of through holes 154 formed therein for etching the BOX layer 2B under the deforming portion 151 and the attaching portion 152. As described below, the BOX layer 2B present between the deforming portion 151/the attaching portion 152 and the moveable electrode joint portion 130 is etched away, and the distal end area of the deforming portion 151 and the entire attaching portion 152 are attached to the moveable electrode joint portion 130 due to a stiction phenomenon. As a result, the moveable electrode portion 12 formed in the device layer 2C and the moveable electrode joint portion 130 formed in the handle layer 2A are electrically continuous with each other through the conduction portion 15.

### (Conduction Portion 14)

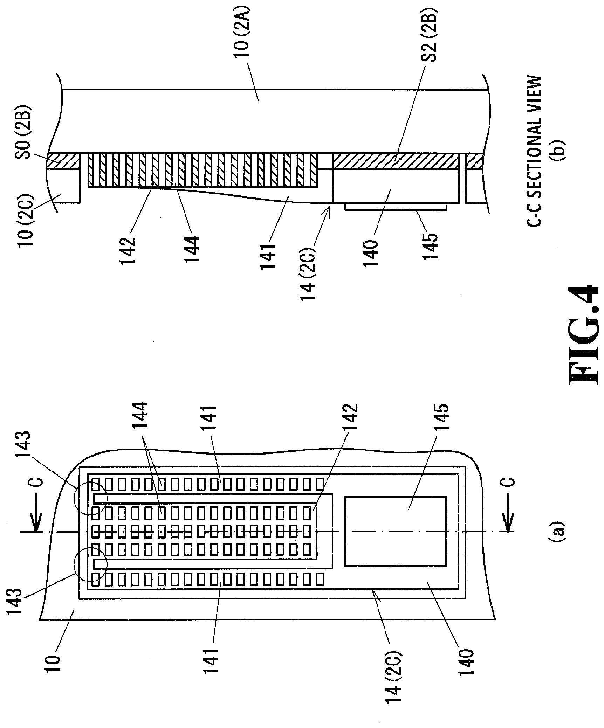

Figure 4 illustrates the conduction portion 14 provided in the device layer 2C of the frame body 10 in detail, and a view (a) is a plan view and a view (b) is a C-C sectional view. The conduction portion 14 also includes a deforming portion 141, an attaching portion 142, and a joint portion 143, all of which have similar structures to those of the conduction portion 15, and the deforming portion 141 and the attaching portion 142 include a plurality of through holes 144 for etching. A root portion of the deforming portion 141 (bottom end in the figure) is connected to a fixed portion 140 of the conduction portion 14. As illustrated in Figure 4 (b), the fixed portion 140 is fixed to the handle layer 2A of the frame body 10 with the BOX layer 2B in the area S2 illustrated in Figure 2 interposed therebetween.

The BOX layer 2B present between the deforming portion 141/the attaching portion 142 and the handle layer 2A of the frame body 10 is etched away, and the distal end area of the deforming portion 141 and the entire attaching portion 142 are attached to the handle layer 2A of the frame body 10 due to a stiction phenomenon. As a result, the conduction portion 14 formed in the device layer 2C is electrically continuous with the handle layer 2A of the frame body 10. As illustrated in Figure 2, the beam portion 131 of the elastically-supporting portion 13 is connected to the handle layer 2A of the frame body 10. Consequently, the conduction portion 14 is electrically continuous with the moveable electrode portion 12 with the handle layer 2A of the frame body 10, the elastically-supporting portion 13, and the conduction portion 15 interposed therebetween.

### (Manufacturing Method of Vibration-driven energy harvesting element 1)

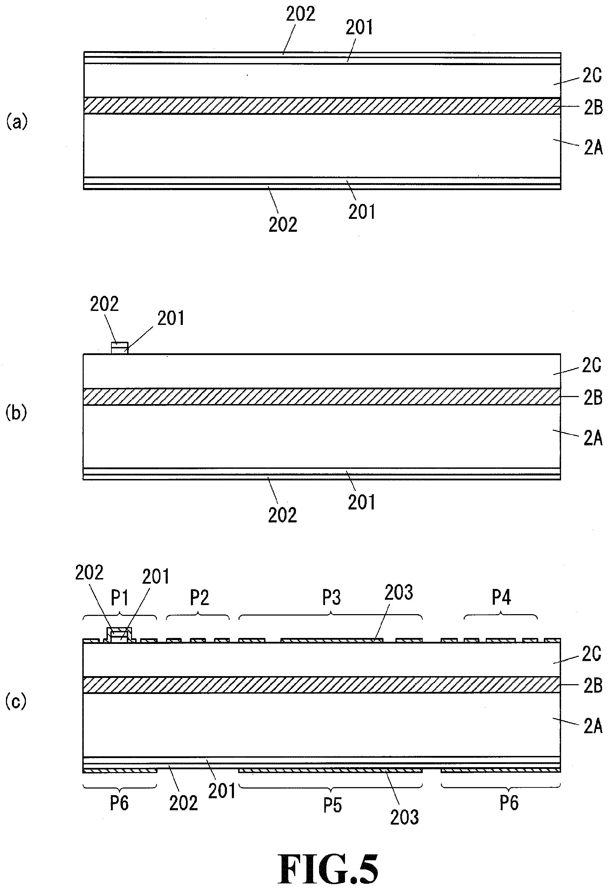

Figures 5 to 8 illustrate an example of a procedure for forming the vibration-driven energy harvesting element 1 by MEMS processing. In Figures 5 to 8, a cross section taken along a long dashed short-dashed line L1 in Figure 1 is schematically illustrated. In a step illustrated in Figure 5 (a), SiN films 201 and Poly-Si films 202 are deposited on both front and back faces of an SOI (Silicon On Insulator) substrate for use in the MEMS processing by means of LP-CVD. The thickness of each layer of the SOI substrate is, for example, as follows: the handle layer 2A is of 500µm, the BOX layer 2B is of 2µm, and the device layer 2C is of 100µm.

In a step illustrated in Figure 5 (b), a resist mask, which is for leaving the SiN film 201 and the Poly-Si film 202 in an area in which the electrode pad 111 is to be formed, is formed on the front face side of the SOI substrate (the surface of the device layer 2C), and the SiN film 201 and the Poly-Si film 202 are etched by RIE (Reactive Ion Etching) using SF ₆ and CF ₄. As a result, the SiN film 201 and the Poly-Si film 202 are patterned on the surface of the device layer 2C.

In a step illustrated in Figure 5 (c), after Al deposited films 203 are formed on both front and back faces of the substrate, a resist mask (not illustrated) for etching the Al deposited film 203 is formed, and the resist mask is used to form Al mask patterns P1 to P6 for etching the handle layer 2A and the device layer 2C. The pattern P1 includes patterns of a portion in which the electrode pad 111 of the fixed electrode portion 11 is to be provided, the pattern P2 includes patterns of the fixed comb teeth 110 related to the fixed electrode portion 11, the pattern P3 includes patterns related to the conduction portion 15, and the pattern P4 includes patterns related to the conduction portion 14. Further, the pattern P5 on the back face side includes patterns related to the moveable electrode joint portion 130 and the pattern P6 includes patterns related to the frame body 10.

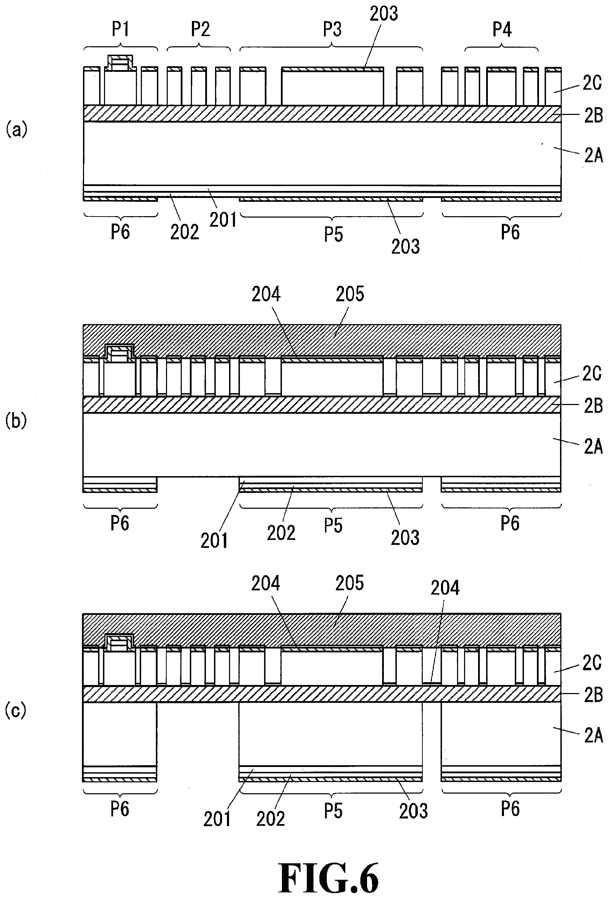

In a step illustrated in Figure 6 (a), the Al mask patterns P1 to P4 on the substrate front face side are used to etch the device layer 2C by DeeP-RIE.

In a step illustrated in Figure 6 (b), an aluminum deposited film 204 and a resist film 205 for protection are formed on the front face side of the substrate, and the Al mask patterns P5 and P6 are used to etch the SiN film 201 and the Poly-Si film 202 on the back face side.

In a step illustrated in Figure 6 (c), mask patterns made of the SiN film 201, the Poly-Si film 202, and the Al deposited film 203 formed on the handle layer 2A are used to etch the handle layer 2A by DeeP-RIE.

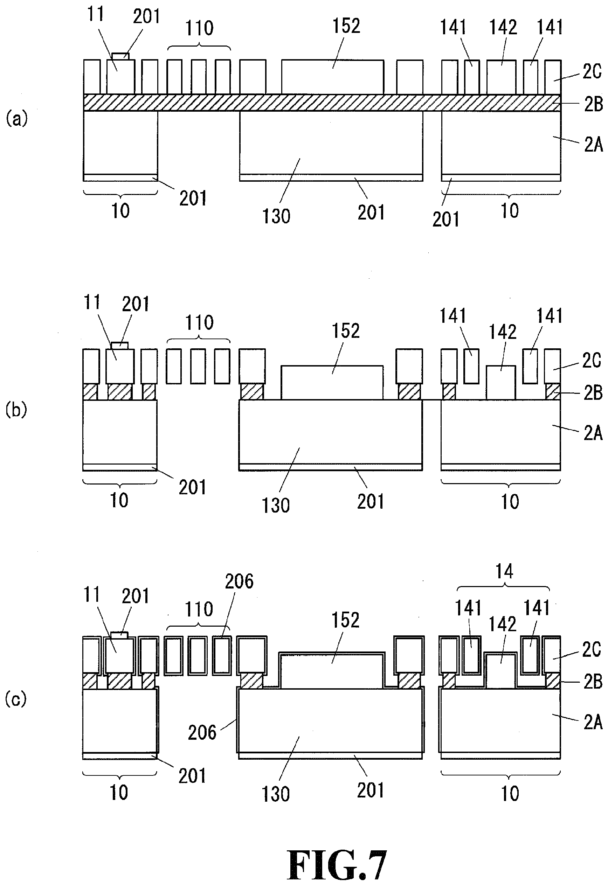

In a step illustrated in Figure 7 (a), the resist film 205 and the Al deposited films 203, 204 on the substrate are removed by SPM (Sulfuric acid Peroxide Mixture) cleaning. Further, the Poly-Si films 202 on the front and back faces of the substrate are removed by RIE using SF 6. The removal of the Poly-Si films 202 may be performed after etching the BOX layer 2B as described below.

In a step illustrated in Figure 7 (b), any exposed BOX layer 2B (SiO₂) is removed by wet etching using BHF (buffered hydrofluoric acid). The BOX layer 2B is etched by BHF through the through holes of the handle layer 2A and the device layer 2C formed by DeeP-RIE, and fixed comb teeth 110 are separated from each other. Although not illustrated in Figure 7 (b), the moveable comb teeth 120 are also separated from each other in a similar manner. In addition, as illustrated in Figure 4, the BOX layer 2B present under the deforming portion 141 and the attaching portion 142 of the conduction portion 14 is removed by BHF, and the distal end area of the deforming portion 141 and the entire attaching portion 142 are attached to the handle layer 2A that is located below and faces them. Although not illustrated in Figure 7 (b), the BOX layer 2B present under the deforming portion 151 and the attaching portion 152 of the conduction portion 15 is removed by BHF as illustrated in Figure 3, and the distal end area of the deforming portion 151 and the entire attaching portion 152 are also attached to the handle layer 2A that is located below and faces them.

In a step illustrated in Figure 7 (c), SiO₂ films 206 that contain potassium ions are formed on surfaces of Si layers for forming electret films.

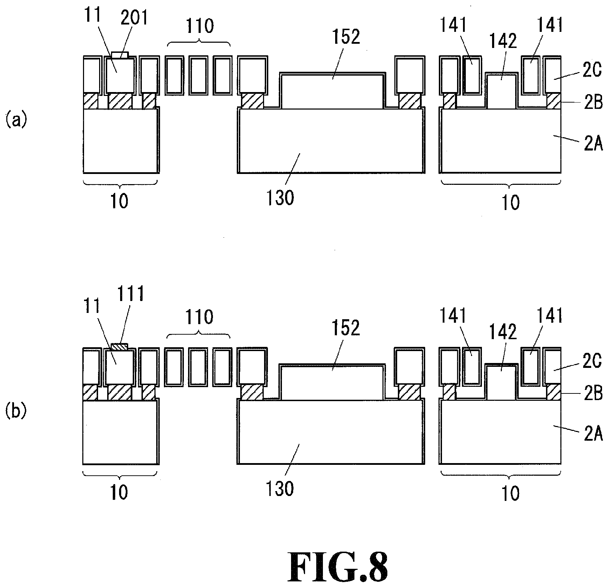

In a step illustrated in Figure 8 (a), the SiN film 201 on the back face of the substrate is removed by RIE using CF ₄ gas. Then, in a step illustrated in Figure 8 (b), a metal film (for example, aluminum) is deposited in an area from which the SiN film 201 on the surface of the substrate has been removed, forming the electrode pad 111.

In the processing procedure as described above, a MEMS workpiece for the vibration-driven energy harvesting element 1 is formed while electrets are still to be formed. The electrets are thereafter formed on the fixed comb teeth 110 and/or the moveable comb teeth 120 according to a known method for forming an electret (for example, see Japanese Patent No. 5627130 or the like).

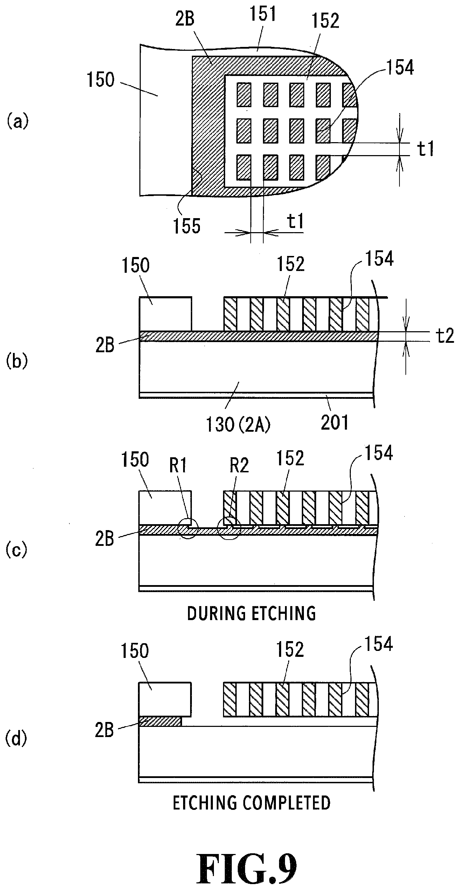

Figure 9 provides views for explanation of dimensions of through holes 154 formed in the deforming portion 151 and the attaching portion 152 of the conduction portion 15. The same applies to the through holes 144 formed in the deforming portion 141 and the attaching portion 142 of the conduction portion 14 and the description will not be repeated. Figure 9 (a) is a plan view illustrating a part of the conduction portion 15 and illustrates a phase prior to etching of the BOX layer 2B by BHF as illustrated in Figure 7 (a).

The BOX layer 2B in an exposed portion in the plan view of Figure 9 (a) and the BOX layer 2B between the attaching portion 152 illustrated in Figure 9 (b) and the moveable electrode joint portion 130 formed in the handle layer 2A are removed by etching using BHF as illustrated in Figure 7 (b). Since the etching of the BOX layer 2B by etchant entering into the through holes 154 and a slot 155 proceeds isotropically, as illustrated in Figure 9 (c), as the thickness of the BOX layer 2B in the exposed portion decreases, the BOX layer 2B under the frame portion 150 indicated by a symbol R1 and the BOX layer 2B under the attaching portion 152 indicated by a symbol R2 will also be etched in right and left directions in the figure.

At the completion of etching when the thickness of BOX layer 2B in the exposed portion reaches zero as in Figure 9 (d), the BOX layer 2B under the attaching portion 152 will be removed completely. Similarly, the BOX layer 2B under the deforming portion 151 in which the through holes 154 are formed is also removed, leaving the deforming portion 151 in a cantilevered shape. Figure 10 is a schematic view of the conduction portion 15 after the BOX layer 2B has been removed. A pair of deforming portions 151 formed on opposite sides of the attaching portion 152 constitutes a cantilever extending from the frame portion 150, and the attaching portion 152 is connected to the distal end of the deforming portion 151 with the joint portion 153 interposed therebetween. The attaching portion 152 extends in a folding back manner in a direction from the distal end of the deforming portion 151 to the frame portion 150.

As a result of the etching in Figure 9 (d), as illustrated in Figure 10, the deforming portion 151 deforms in a direction of the moveable electrode joint portion 130, and the distal end of the deforming portion 151 and the attaching portion 152 connected to the distal end adhere on a top face of the moveable electrode joint portion 130 due to a stiction phenomenon. The moveable electrode joint portion 130 formed in the handle layer 2A and the conduction portion 15 formed in the device layer 2C are thereby mechanically and electrically connected into electrical continuity. As illustrated in Figure 2, the moveable electrode joint portion 130 is elastically supported in the handle layer 2A of the frame body 10 with the beam portion 131 interposed therebetween and the conduction portion 15 is connected to the moveable electrode portion 12, which means that the moveable electrode portion 12 is electrically continuous with the handle layer 2A of the frame body 10 with the conduction portion 15 interposed therebetween.

The spacing between the through holes 154 is determined from viewpoints as described below. It is preferable to determine a spacing t1 between through holes 154 in such a way that when the exposed BOX layer 2B is etched away by vertical etching as illustrated in Figure 9 (d), the BOX layer 2B present under the deforming portion 151 and the attaching portion 152 is removed substantially at the same time by lateral etching effected by etchant entering from the through holes 154. As a matter of course, the spacing t1 may be determined in such a way that before the exposed BOX layer 2B is removed by vertical etching, adjacent through holes 154 are brought into communication on the BOX layer 2B side. In other words, assuming that the thickness of the BOX layer 2B is defined as t2, it is only necessary to satisfy t1≤2×t2.

With regard to the conduction portion 14 provided in the frame body 10 (see Figure 4), it also has a structure similar to the conduction portion 15, and as illustrated in Figure 4, the distal end of the deforming portion 141 in a cantilevered shape and the attaching portion 142 adhere to the handle layer 2A of the frame body 10. As a result, the device layer 2C in which the electrode pad 145 is formed and the handle layer 2A of the frame body 10 are electrically continuous with each other. Accordingly, generated electric power can be extracted from the electrode pad 145 of the conduction portion 14 and the electrode pad 111 of the fixed electrode portion 11 as illustrated in Figure 1.

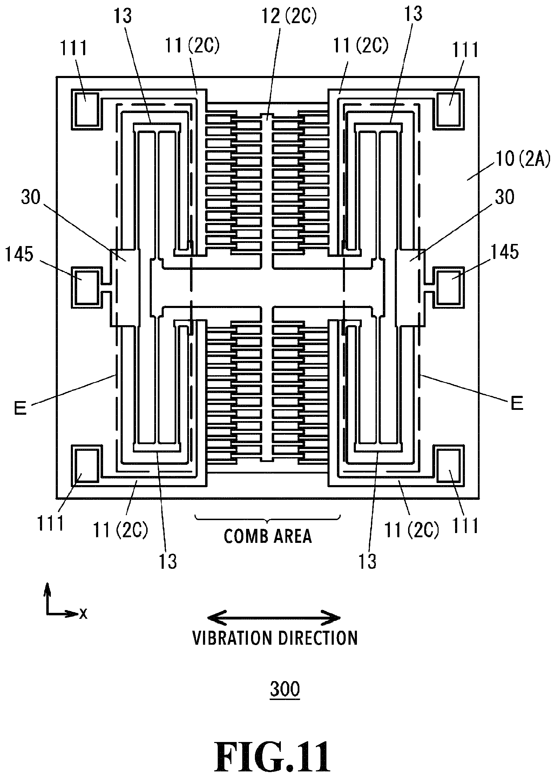

Advantageous effects of the vibration-driven energy harvesting element 1 of the embodiment will now be described in comparison with a comparative example in Figure 11.

### (Comparative Example)

Figure 11 illustrates a comparative example for the vibration-driven energy harvesting element 1 of the embodiment. A vibration-driven energy harvesting element 300 illustrated in Figure 11 is different from the vibration-driven energy harvesting element 1 in Figure 1 in that 4 sets of elastically-supporting portions 13 are formed in the device layer 2C along with the moveable electrode portion 12. In the vibration-driven energy harvesting element in Figure 11, the elastically-supporting portion 13 elastically supporting the moveable electrode portion 12 is joined to the fixed portion 30 formed in the device layer 2C. The fixed portion 30 is fixed on the frame body 10 formed in the handle layer 2A with the BOX layer 2B interposed therebetween. The moveable electrode portion 12 is electrically continuous with the electrode pad 145 with the elastically-supporting portion 13 and the fixed portion 30 formed in the device layer 2C interposed therebetween.

As described above, in the comparative example illustrated in Figure 11, since the elastically-supporting portion 13 is formed in the device layer 2C along with the moveable electrode portion 12, an area E for arranging the elastically-supporting portion 13 is required in such a way that it is adjacent to a comb area separately from the comb area. The presence of the area E prevents size reduction of the vibration-driven energy harvesting element in terms of the shape seen in plan view.
(1) The vibration-driven energy harvesting element 1 of the embodiment includes: the fixed electrode portion 11 and the moveable electrode portion 12 formed in the device layer 2C of the substrate provided with the handle layer 2A and the device layer 2C with the BOX layer 2B, which is an insulation layer, interposed therebetween; the frame body 10 formed from the handle layer 2A and the device layer 2C disposed with the BOX layer 2B interposed therebetween, the frame body 10 supporting the fixed electrode portion 11 in the device layer 2C; the elastically-supporting portion 13 formed in the handle layer 2A and elastically supporting the moveable electrode portion 12 by the beam portion 131 joined to the handle layer 2A of the frame body 10; and the conduction portion 15 electrically connecting the moveable electrode portion 12 and the elastically-supporting portion 13.

As illustrated in Figure 1, in the vibration-driven energy harvesting element 1 of the embodiment, the elastically-supporting portion 13 is formed in the handle layer 2A, the moveable comb teeth 120 and the fixed comb teeth 110 are formed in the device layer 2C, and primary components of the vibration-driven energy harvesting element 1 are arranged in a stacked manner in the thickness direction of the substrate. As a result, the area of the vibration-driven energy harvesting element in plan view can be restrained substantially as much as a total area of an area in which the moveable comb teeth 120 and the fixed comb teeth 110 are formed and the area of the frame body 10. In contrast, in the case of the configuration of the comparative example, the size may be made larger than the embodiment by the area E for arranging the elastically-supporting portion. In this way, with the vibration-driven energy harvesting element 1 of the embodiment, the footprint of the vibration-driven energy harvesting element 1 can be smaller than that of the prior art. In other words, the amount of power generation can be increased, while the area of element is restrained as large as that of the vibration-driven energy harvesting element 300 of the comparative example.

In the case of the comparative example in Figure 11, since the moveable electrode portion 12, the elastically-supporting portion 13, and the fixed portion 30 are formed in the continuous device layer 2C, generated electric power can easily be extracted through the electrode pad 145 of the fixed portion 30 provided on the frame body 10 and the electrode pad 111 of the fixed electrode portion 11.

On the other hand, in the vibration-driven energy harvesting element 1 of the embodiment, there is no immobile portion that is continuous with the moveable electrode portion 12 as with the fixed portion 30 in Figure 11. As such, the conduction portion 15 electrically connecting the moveable electrode portion 12 and the elastically-supporting portion 13 is provided, so that the handle layer 2A of the frame body 10 is brought into electrical connection with the moveable electrode portion 12 with the elastically-supporting portion 13 and the conduction portion 15 interposed therebetween. As a result, generated electric power can easily be extracted by connecting an output terminal to the handle layer 2A of the frame body 10. In other words, such an output terminal can be provided on the back face side of the substrate.

(2) As illustrated in Figure 3, the conduction portion 15 may be configured such that it includes a plate-like member (the deforming portion 151 and the attaching portion 152) formed in the device layer 2C that is continuous with the moveable electrode portion 12 and facing the moveable electrode joint portion 130 formed in the handle layer 2A without the BOX layer 2B interposed therebetween. The plate-like member is provided with the deforming portion 151 in a cantilevered shape facing the handle layer 2A without the BOX layer 2B interposed therebetween; and the attaching portion 152 connected to the distal end of the deforming portion 151 and extending from the distal end in a folding back manner in a root direction (x-axis minus direction) of the deforming portion 151, the attaching portion 152 being attached to the handle layer 2A of the moveable electrode joint portion 130. The deforming portion 151 and the attaching portion 152 have a plurality of through holes 154 formed therein for etching away, by BHF, the BOX layer 2B between the device layer 2C in which the deforming portion 151 and the attaching portion 152 are formed and the handle layer 2A of the moveable electrode joint portion 130. The conduction portion 14 is configured in a similar manner to the conduction portion 15 as illustrated in Figure 4.

In the conduction portion 15, since the deforming portion 151 in a cantilevered shape is brought into contact with the handle layer 2A only in an area near the distal end, it is not possible to achieve a sufficient conductive state only through the deforming portion 151. Accordingly, in the conduction portion 15, the attaching portion 152 that has a folding back structure connected to the distal end of the deforming portion 151 in a cantilevered shape to ensure a sufficient contact area.

(3) Further, the conduction portion 14 electrically connecting the handle layer 2A of the frame body 10 and the device layer 2C is provided, and thereby the electrode pad 145 electrically connected to the moveable electrode portion 12 can be arranged on the device layer side of the frame body 10. As a result, both the electrode pads 111 and 145, which are output terminals, can be arranged on the front face side (device layer side) of the substrate. The access to the electrode pads 111 and 145 is facilitated.

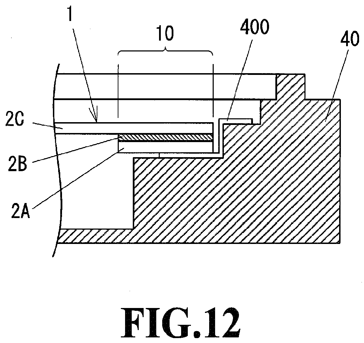

When the conduction portion 14 is not to be provided, for example, as illustrated in Figure 12, it may be possible to configure such that the electrode pad 400 is formed in an element mounting portion of a case 40 in which the vibration-driven energy harvesting element 1 is accommodated, and the handle layer 2A of the frame body 10 of the vibration-driven energy harvesting element 1 is attached to the electrode pad 400. As a result, connecting wirings for extracting generated electric power to the electrode pad 400 makes it possible to easily extract the generated electric power.

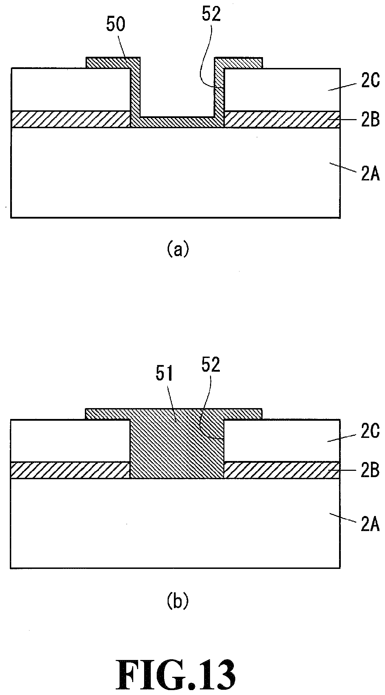

For the configurations of the conduction portions 14, 15, they are not limited to those illustrated in Figures 3 and 4, but may be those illustrated in Figure 13. In the configuration illustrated in Figure 13 (a), a through hole 52 that reaches the handle layer 2A is formed and a metal deposited film 50 is deposited on an area including the through hole 52. With the metal deposited film 50, the handle layer 2A and the device layer 2C are electrically connected. Further, in the configuration illustrated in Figure 13 (b), a conductive paste 51 is disposed in the area including the through hole 52 such that the handle layer 2A and the device layer 2C are electrically connected.

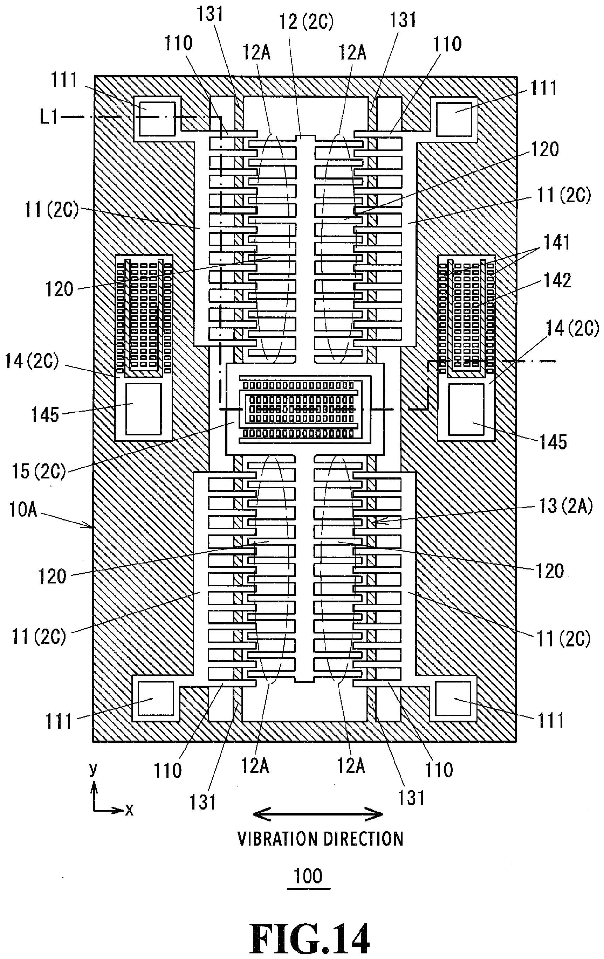

In the configuration of the embodiment illustrated in Figure 1 described above, the device layer 2C is formed on the frame body 10 so as to surround the conduction portion 14 with the gap interposed therebetween. However, the device layer 2C in this area is not essential, and a frame body 10A as in a vibration-driven energy harvesting element 100 illustrated in Figure 14 may be applicable. Note that in the variation illustrated in Figure 14, portions formed of the handle layer 2A, that is, the handle layer 2A of the frame body 10A and the beam portion 131 of the elastically-supporting portion 13 are hatched.

The beam portion 131 is joined to the handle layer 2A of the frame body 10A and the fixed electrode 11 is supported in the device layer 2C on the frame body 10A. Further, the conduction portion 14 is formed in the device layer 2C of the frame body 10A, and the deforming portion 141 of the conduction portion 14 and the attaching portion 142 electrically connect the handle layer 2A of the frame body 10A and the device layer 2C in which the electrode pad 145 is formed. In the configuration illustrated in Figure 14, advantageous effects similar to those of the vibration-driven energy harvesting element 1 in Figure 1 described above can also be produced.

In the embodiment described above, description has been made as to the vibration-driven energy harvesting element 1 provided with 4 sets of fixed electrode portions 11 and moveable electrode portions 12. However, the present invention is not limited to such a comb structure of the vibration-driven energy harvesting element of the embodiment. The present invention is also applicable to a comb electrode structure provided with one set of fixed electrode portion and moveable electrode portion.

Description has also been made as to an example of the vibration-driven energy harvesting element in which an electret film is formed on the fixed comb teeth and/or the moveable comb teeth. However, such an electret film is not essential, provided that a necessary amount of power generation can be output.

In the embodiment described above, description has been made as to an example of the vibration-driven energy harvesting element 1 including a fixed electrode portion 11 having a plurality of fixed comb teeth 110 and a moveable electrode portion 12 having a plurality of moveable comb teeth 120 that are arranged to interdigitate with the plurality of fixed comb teeth 110 with a gap interposed therebetween, the vibration-driven energy harvesting element 1 being structured to elastically support the moveable electrode portion 12 so as to be displaceable in a direction in which an amount of insertion of the comb teeth changes. However, the present invention is not limited to the vibration-driven energy harvesting element 1 in such a configuration. For example, the present invention may also be applicable to a vibration-driven energy harvesting element in which fixed comb teeth 110 and moveable comb teeth 120 are arranged such that their comb teeth distal end faces face each other and the moveable comb teeth 120 are vibrated relative to the fixed comb teeth 110 in a laterally sliding motion, as with the vibration-driven energy harvesting element described in Japanese Patent No. 6338070.

Various embodiments and variations have been described above. However, the present invention is not limited to the content thereof. Other aspects conceivable within the scope of technical ideas of the present invention, for example, application to MEMS sensors are also within the scope of the present invention.

The disclosed contents of the following priority basic applications and patent publications are indicated for information.
Japanese Patent Application No. 2019-008337 (filed January, 22, 2019)
Japanese Patent No. 5627130
Japanese Patent No. 6338070

### [Reference Signs List]

1, 100... vibration-driven energy harvesting element, 2A...handle layer, 2B...BOX layer, 2C...device layer, 10, 10A...frame body, 11... fixed electrode portion, 12...moveable electrode portion, 13...elastically-supporting portion, 14, 15...conduction portion, 130...moveable electrode joint portion, 131...beam portion, 141, 151...deforming portion, 142, 152...attaching portion, 144, 154...through hole

## Claims

1. A vibration-driven energy harvesting element (1), comprising:
a fixed electrode portion (11) and a moveable electrode portion (12) formed in a second layer (2C) of a substrate provided with a first layer (2A) and the second layer (2C) with an insulation layer (2B) interposed therebetween;
a frame body (10) formed from the first layer (2A) and the second layer (2C) disposed with the insulation layer (2B) interposed therebetween, the frame body (10) supporting the fixed electrode portion (11) in the second layer (2C); **characterized in that** it further comprises
an elastically-supporting portion (13) formed in the first layer (2A) and elastically supporting the moveable electrode portion (12) by a beam portion (131) joined to the first layer (2A) of the frame body (10); and
a first conduction portion (15) electrically connecting the moveable electrode portion (12) and the elastically-supporting portion (13).

2. The vibration-driven energy harvesting element (1) according to claim 1, wherein
the first conduction portion (15) includes a first plate-like member (151, 152) formed in the second layer (2C) that is continuous with the moveable electrode portion (12) and facing the elastically-supporting portion (13) without the insulation layer (2B) interposed therebetween,
the first plate-like member (151, 152) has:
a first deforming portion (151) in a cantilevered shape facing the elastically-supporting portion (13) without the insulation layer (2B) interposed therebetween; and
a first attaching portion (152) connected to a distal end of the first deforming portion (151) in a cantilevered shape and extending from the distal end in a folding back manner in a root direction of the first deforming portion (151), the first attaching portion (152) being attached to the elastically-supporting portion (13), and
the first deforming portion (151) and the first attaching portion (152) have a plurality of holes (154) formed therein, the holes (154) passing through in a thickness direction of the first plate-like member (151, 152).

3. The vibration-driven energy harvesting element (1) according to claim 1 or claim 2, further comprising
a second conduction portion (14) electrically connecting the first layer (2A) and the second layer (2C) of the frame body (10).

4. The vibration-driven energy harvesting element (1) according to claim 3, wherein
the second conduction portion (14) includes a second plate-like member (141, 142) formed in the second layer (2C) of the frame body (10) and facing the first layer (2A) of the frame body (10) without the insulation layer (2B) interposed therebetween,
the second plate-like member (141, 142) has:
a second deforming portion (141) in a cantilevered shape facing the first layer (2A) of the frame body (10) without the insulation layer (2B) interposed therebetween; and
a second attaching portion (142) connected to a distal end of the second deforming portion (141) in a cantilevered shape and extending from the distal end in a folding back manner in a root direction of the second deforming portion (141), the second attaching portion (142) being attached to the first layer (2A) of the frame body (10), and
the second deforming portion (141) and the second attaching portion (142) have a plurality of holes (144) formed therein, the holes (144) passing through in a thickness direction of the second plate-like member (141,142).

5. The vibration-driven energy harvesting element (1) according to any one of claims 1 to 4, wherein
the fixed electrode portion (11) has a plurality of fixed comb teeth (110),
the moveable electrode portion (12) has a plurality of moveable comb teeth (120) arranged to interdigitate with the plurality of fixed comb teeth (110) with a gap interposed therebetween, and
the elastically-supporting portion (13) elastically supports the moveable electrode portion (12) so as to be displaceable in a direction in which an amount of insertion of the moveable comb teeth (120) relative to the fixed comb teeth (110) changes.

6. A vibration-driven energy harvesting element (1), comprising:
a fixed comb electrode (110) formed in a first layer (2A) of a substrate including the first layer (2A) and a second layer (2C) layered with an insulation layer (2B) interposed therebetween
a moveable comb electrode (120) formed in the first layer (2A) and moveable relative to the fixed comb electrode (110); **characterized in that** it further comprises
an elastically-supporting portion (13) formed in the second layer (2C) and elastically supporting the moveable comb electrode (120); and
a connecting portion (15) formed in the first layer (2A) and mechanically and electrically connecting the moveable comb electrode (120) to the elastically-supporting portion (13).

## Patentansprüche

1. Schwingungsgetriebenes Energiegewinnungselement (1), das aufweist:
einen festen Elektrodenabschnitt (11) und einen beweglichen Elektrodenabschnitt (12), die in einer zweiten Schicht (2C) eines Substrats ausgebildet sind, das mit einer ersten Schicht (2A) und der zweiten Schicht (2C) mit einer dazwischen angeordneten Isolierschicht (2B) versehen ist;
einen Rahmenkörper (10), der aus der ersten Schicht (2A) und der zweiten Schicht (2C) gebildet ist, wobei die Isolierschicht (2B) dazwischen angeordnet ist, wobei der Rahmenkörper (10) den festen Elektrodenabschnitt (11) in der zweiten Schicht (2C) trägt;
**dadurch gekennzeichnet, dass** es ferner
einen elastisch stützenden Abschnitt (13), der in der ersten Schicht (2A) ausgebildet ist und den beweglichen Elektrodenabschnitt (12) durch einen Trägerabschnitt (131), der mit der ersten Schicht (2A) des Rahmenkörpers (10) verbunden ist, elastisch stützt; und
einen ersten Leitungsabschnitt (15), der den beweglichen Elektrodenabschnitt (12) und den elastisch tragenden Abschnitt (13) elektrisch verbindet, aufweist.

2. Schwingungsgetriebenes Energiegewinnungselement (1) nach Anspruch 1, bei dem
der erste Leitungsabschnitt (15) ein erstes plattenartiges Element (151, 152) aufweist, das in der zweiten Schicht (2C) ausgebildet ist, die mit dem beweglichen Elektrodenabschnitt (12) zusammenhängend ist und dem elastisch stützenden Abschnitt (13) ohne die dazwischen liegende Isolierschicht (2B) gegenüberliegt,
das erste plattenförmige Element (151, 152) hat:
einen ersten verformbaren Abschnitt (151) in freitragender Form, der dem elastisch tragenden Abschnitt (13) zugewandt ist, ohne dass die Isolierschicht (2B) dazwischen angeordnet ist; und
einen ersten Befestigungsabschnitt (152), der mit einem distalen Ende des ersten Verformungsabschnitts (151) in einer freitragenden Form verbunden ist und sich von dem distalen Ende in einer zurückklappenden Weise in einer Wurzelrichtung des ersten Verformungsabschnitts (151) erstreckt, wobei der erste Befestigungsabschnitt (152) an dem elastisch stützenden Abschnitt (13) befestigt ist, und
der erste Verformungsabschnitt (151) und der erste Befestigungsabschnitt (152) eine Mehrzahl von Löchern (154) aufweisen, die darin ausgebildet sind, wobei die Löcher (154) in einer Dickenrichtung des ersten plattenartigen Elements (151, 152) durchlaufen.

3. Schwingungsgetriebenes Energiegewinnungselement (1) nach Anspruch 1 oder Anspruch 2, weiter aufweisend
einen zweiten Leitungsabschnitt (14), der die erste Schicht (2A) und die zweite Schicht (2C) des Rahmenkörpers (10) elektrisch verbindet.

4. Schwingungsgetriebenes Energiegewinnungselement (1) nach Anspruch 3, bei dem
der zweite Leitungsabschnitt (14) ein zweites plattenartiges Element (141, 142) umfasst, das in der zweiten Schicht (2C) des Rahmenkörpers (10) ausgebildet ist und der ersten Schicht (2A) des Rahmenkörpers (10) zugewandt ist, ohne dass die Isolierschicht (2B) dazwischen angeordnet ist,
das zweite plattenförmige Element (141, 142) hat:
einen zweiten verformbaren Abschnitt (141) in einer freitragenden Form, der der ersten Schicht (2A) des Rahmenkörpers (10) zugewandt ist, ohne dass die Isolierschicht (2B) dazwischen angeordnet ist; und
einen zweiten Befestigungsabschnitt (142), der mit einem distalen Ende des zweiten Verformungsabschnitts (141) in einer freitragenden Form verbunden ist und sich von dem distalen Ende in einer zurückklappenden Weise in einer Wurzelrichtung des zweiten Verformungsabschnitts (141) erstreckt, wobei der zweite Befestigungsabschnitt (142) an der ersten Schicht (2A) des Rahmenkörpers (10) befestigt ist, und
der zweite Verformungsabschnitt (141) und der zweite Befestigungsabschnitt (142) eine Mehrzahl von Löchern (144) aufweisen, die darin ausgebildet sind, wobei die Löcher (144) in einer Dickenrichtung des zweiten plattenartigen Elements (141, 142) durchlaufen.

5. Schwingungsgetriebenes Energiegewinnungselement (1) nach einem der Ansprüche 1 bis 4, bei dem
der feste Elektrodenabschnitt (11) eine Vielzahl von festen Kammzähnen (110) aufweist,
der bewegliche Elektrodenabschnitt (12) eine Vielzahl von beweglichen Kammzähnen (120) aufweist, die so angeordnet sind, dass sie mit der Vielzahl von festen Kammzähnen (110) mit einem dazwischen angeordneten Spalt ineinandergreifen, und
der elastisch stützende Abschnitt (13) den beweglichen Elektrodenabschnitt (12) elastisch stützt, so dass er in einer Richtung verschiebbar ist, in der sich ein Einschubbetrag der beweglichen Kammzähne (120) relativ zu den festen Kammzähnen (110) ändert.

6. Schwingungsgetriebenes Energiegewinnungselement (1), das aufweist:
eine feste Kamm-Elektrode (110), die in einer ersten Schicht (2A) eines Substrats ausgebildet ist, das die erste Schicht (2A) und eine zweite Schicht (2C) enthält, die mit einer dazwischen liegenden Isolierschicht (2B) geschichtet ist
eine bewegliche Kamm-Elektrode (120), die in der ersten Schicht (2A) ausgebildet und relativ zu der festen Kamm-Elektrode (110) beweglich ist; **dadurch gekennzeichnet, dass** es ferner
einen elastisch stützenden Abschnitt (13), der in der zweiten Schicht (2C) ausgebildet ist und die bewegliche Kamm-Elektrode (120) elastisch stützt; und
einen Verbindungsabschnitt (15), der in der ersten Schicht (2A) ausgebildet ist und die bewegliche Kamm-Elektrode (120) mit dem elastisch tragenden Abschnitt (13) mechanisch und elektrisch verbindet, aufweist.

## Revendications

1. Élément de génération d'énergie de vibration (1), comprenant :
une partie d'électrode fixe (11) et une partie d'électrode mobile (12) formées dans une seconde couche (2C) d'un substrat pourvu d'une première couche (2A) et d'une seconde couche (2C) avec une couche isolante (2B) interposée entre elles ;
un corps de cadre (10) formé de la première couche (2A) et de la seconde couche (2C) disposée avec la couche isolante (2B) interposée entre elles, le corps de cadre (10) supportant la partie d'électrode fixe (11) dans la seconde couche (2C) ;
**caractérisé par le fait qu'**il comprend en outre
une partie de support élastique (13) formée dans la première couche (2A) et supportant élastiquement la partie d'électrode mobile (12) par une partie de poutre (131) reliée à la première couche (2A) du corps de cadre (10) ; et
une première partie de conduction (15) reliant électriquement la partie d'électrode mobile (12) et la partie de support élastique (13).

2. Élément de génération d'énergie de vibration (1) selon la revendication 1, dans lequel
la première partie de conduction (15) comprend un premier élément en forme de plaque (151, 152) formé dans la seconde couche (2C) qui est continue avec la partie d'électrode mobile (12) et qui fait face à la partie de support élastique (13) sans la couche isolante (2B) interposée entre celle-ci,
le premier élément en forme de plaque (151, 152) a :
une première partie déformante (151) en porte-à-faux face à la partie de support élastique (13) sans la couche isolante (2B) interposée entre celle-ci ; et
une première partie de fixation (152) reliée à une extrémité distale de la première partie déformante (151) en porte-à-faux et s'étendant à partir de l'extrémité distale de manière à se replier dans la direction de la racine de la première partie déformante (151), la première partie de fixation (152) étant fixée à la partie de support élastique (13), et
la première partie déformante (151) et la première partie de fixation (152) ont une pluralité de trous (154) qui s'y forment, les trous (154) traversant dans la direction d'épaisseur du premier élément en forme de plaque (151, 152).

3. Élément de génération d'énergie de vibration (1) selon la revendication 1 ou la revendication 2, comprenant en outre
une seconde partie de conduction (14) reliant électriquement la première couche (2A) et la seconde couche (2C) du corps de cadre (10).

4. Élément de génération d'énergie de vibration (1) selon la revendication 3, dans lequel
la seconde partie de conduction (14) comprend un second élément en forme de plaque (141, 142) formé dans la seconde couche (2C) du corps de cadre (10) et faisant face à la première couche (2A) du corps de cadre (10) sans la couche isolante (2B) interposée entre les deux,
le second élément en forme de plaque (141, 142) a :
une seconde partie déformante (141) en porte-à-faux face à la première couche (2A) du corps de cadre (10) sans la couche isolante (2B) interposée entre celle-ci ; et
une seconde partie de fixation (142) reliée à une extrémité distale de la seconde partie déformante (141) en porte-à-faux et s'étendant à partir de l'extrémité distale de manière à se replier dans la direction de la racine de la deuxième partie déformante (141), la seconde partie de fixation (142) étant fixée à la première couche (2A) du corps de cadre (10), et
la seconde partie déformante (141) et la seconde partie de fixation (142) ont une pluralité de trous (144) qui s'y forment, les trous (144) traversant dans la direction d'épaisseur le second élément en forme de plaque (141, 142).

5. Élément de génération d'énergie de vibration (1) selon l'une quelconque des revendications 1 à 4, dans lequel
la partie d'électrode fixe (11) a une pluralité de dents de peigne fixes (110),
la partie d'électrode mobile (12) a une pluralité de dents de peigne mobiles (120) disposées de manière à s'imbriquer avec la pluralité de dents de peigne fixes (110) avec un espace interposé entre elles, et
la partie de support élastique (13) supporte élastiquement la partie d'électrode mobile (12) de manière à pouvoir être déplacée dans une direction dans laquelle l'importance de l'insertion des dents de peigne mobiles (120) par rapport aux dents de peigne fixes (110) change.

6. Élément de génération d'énergie de vibration (1), comprenant :
une électrode à peigne fixe (110) formée dans une première couche (2A) d'un substrat comprenant la première couche (2A) et une seconde couche (2C) avec une couche isolante (2B) interposée entre elles
une électrode en peigne mobile (120) formée dans la première couche (2A) et mobile par rapport à l'électrode en peigne fixe (110) ; **caractérisé en ce qu'**il comprend en outre
une partie de support élastique (13) formée dans la seconde couche (2C) et supportant élastiquement l'électrode à peigne mobile (120) ; et
une partie de connexion (15) formée dans la première couche (2A) et reliant mécaniquement et électriquement l'électrode à peigne mobile (120) à la partie de support élastique (13).
